# EUROPÄISCHE PATENTSCHRIFT

(11) **EP 1 214 778 B1**
(45) Veröffentlichungstag und Bekanntmachung des Hinweises auf die Patenterteilung: **04.05.2005**
(21) Anmeldenummer: 00960316.8
(22) Anmeldetag: 25.07.2000
(51) Int. Cl.: H02P 7/05

(54) **ANORDNUNG ZUM SCHUTZ EINER EINEN INDUKTIVEN VERBRAUCHER SCHALTENDEN LEISTUNGSHALBLEITER-ENDSTUFE**
ARRANGEMENT FOR THE PROTECTION OF A POWER SEMICONDUCTOR OUTPUT STAGE SWITCHING AN INDUCTIVE CONSUMER
DISPOSITIF POUR PROTEGER UN ETAGE TERMINAL A SEMI-CONDUCTEUR DE PUISSANCE COMMANDANT PAR COMMUTATION UN CONSOMMATEUR INDUCTIF

(30) Priorität: 02.09.1999 DE 19941698
(43) Veröffentlichungstag der Anmeldung: 19.06.2002
(73) Patentinhaber: ROBERT BOSCH GMBH, 70442 Stuttgart (DE)
(72) Erfinder: KESSLER, Martin, D-77815 Brühl (DE); KOCH, Stefan, D-77855 Achern (DE)
(86) Internationale Anmeldenummer: PCT/DE2000/002421
(87) Internationale Veröffentlichungsnummer: WO 2001/018950

(56) Entgegenhaltungen:
- WO-A-93/23918
- DE-U- 29 622 254
- US-A- 4 164 696

## Beschreibung

Die Erfindung betrifft eine Anordnung zum Schutz von mit MOS-FETs in Low-Side-Schaltung gebildeten Leistungshalbleiter-Endstufen, die in Abhängigkeit eines Steuersignals gegensinnige Erregerwicklungen eines elektronisch kommutierbaren Motors oder gegensinnig gewickelte Spulen eines Schaltrelais oder eines Schaltschützes mit gemeinsamem Magnetkreis an eine Gleichstrom-Versorgungsspannung anschalten und von dieser abschalten, wobei Energie transformatorisch von einer Erregerwicklung oder Spule auf die als Zusatzinduktivität wirkende andere Erregerwicklung oder Spule übertragbar ist, die mit einem Widerstand belastet oder in Gegenstromrichtung mit der Gleichstrom-Versorgungsspannung gekoppelt ist, und wobei die Zusatzinduktivität für eine bestromte Erregerwicklung jeweils die im Kommutierungszyklus nachfolgend gegensinnig bestromte Erregerwicklung ist.

### Stand der Technik

Eine derartige Anordnung zum Schutz einer Leistungshalbleiter-Endstufe ist in der DE 296 22 254 U1 angegeben. Bei dieser bekannten Anordnung werden zwei Phasenwicklungen über Schalter alternierend an eine Spannungsquelle angeschlossen. Die während der Bestromung einer der beiden Phasenwicklungen in deren Induktivität gespeicherte magnetische Feldenergie, d.h. die während der Bestromung nicht in Bewegungsenergie umgesetzte elektrische Restenergie, wird mittels transformatorischer Kopplung auf die jeweils andere Phasenwicklung in dessen Induktivität transferiert. Dadurch wird ein großer Teil der nicht in Bewegungsenergie umsetzbaren Restenergie rekuperativ von einer in die andere Phasenwicklung und wieder zurück geshiftet. Im Zusammenhang mit der Verwendung von IGBT's, MOS-FETs oder Bipolartransistoren ist ausgeführt, dass die beim Abschalten der bestromten Induktivität auftretende Überspannung über zusätzliche Dioden in ein für beide Schalter gleichsam verwendetes RC-Entlastungsnetzwerk transferiert wird.

Bei in der US-A 4,164,696 und der WO 93/23918 A angegebenen weiteren Anordnungen zum Ansteuern von Phasenwicklungen elektrischer Motoren werden Phasenwicklungen ebenfalls über Steuereinrichtungen mit Leistungshalbleitern angesteuert, wobei aufeinanderfolgende Wicklungen transformatorisch gekoppelt sind.

Weitere derartige Reihenschaltungen aus Leistungshalbleiter-Endstufe und induktivem Verbraucher werden für verschiedene Anwendungen eingesetzt. Dabei wird mit dem Steuersignal die Leistungshalbleiter-Endstufe stets voll durchgesteuert, um ihre Verlustleistung möglichst klein zu halten. Beim Abschalten der Leistungshalbleiter-Endstufe entsteht am induktiven Verbraucher eine Abschaltenergie W = ½ LI², die von der Leistungshalbleiter-Endstufe ferngehalten werden muss, da diese über die parasitäre Diode derselben einen Stromfluss erzeugen würde, der zu einer Überlastung oder Zerstörung der Leistungshalbleiter-Endstufe führen könnte. Um dies zu verhindern, wird dem Verbraucher eine sogenannte Freilaufdiode parallel geschaltet, die als Leistungsdiode an die geschaltete Leistung der Reihenschaltung anzupassen ist und daher sehr teuer ist.

Wie die WO 96/09683 zeigt, ist es bei elektronisch kommutierbaren Motoren auch bekannt, in den Freilaufkreis einer Erregerwicklung jeweils die nachfolgend zu bestromende Erregerwicklung einzubeziehen und so bereits eine Vormagnetisierung zu erreichen. Diese Anordnung benötigt jedoch nach wie vor die Freilaufdiode als Koppeldioden zwischen den Erregerwicklungen.

Es ist Aufgabe der Erfindung, eine Anordnung der eingangs erwähnten Art zu schaffen, die bei vereinfachtem Aufbau die Abschaltenergie des induktiven Verbrauchers von der Leistungshalbleiter-Endstufe fernhält und abführt.

Diese Aufgabe wird bei einer Anordnung der eingangs erwähnten Art nach der Erfindung dadurch gelöst, dass die beim Abschalten am induktiven Verbraucher auftretende Abschaltenergie auf die Zusatzinduktivität übertragbar ist und dass die Leistungshalbleiter-Endstufen N-Kanal-MOS-FETs sind, wobei eine parasitäre Diode des jeweiligen MOS-FET beim Abschalten des Steuersignals einen Stromkreis mit verringertem Stromfluss bildet.

Die Abschaltenergie wird beim Abschalten der Reihenschaltung auf die Zusatzinduktivität, d.h. einen von der Reihenschaltung getrennten Kreis, übertragen und in diesem durch Belastung abgeführt. Dabei kann durch entsprechende Kopplung der Zusatzinduktivität die frei werdende Energie auch zur Gleichstrom-Versorgungsspannung zurück übertragen werden. Mit den angegebenen Maßnahmen kann auf Freilaufdioden verzichtet werden. Mit den N-Kanal-Mos-FETs in Low-Side-Schaltung ergeben sich besonders einfache Schaltungen.

Bei einem Schaltrelais und einem Schaltschütz ist die Auslegung in einfacher Weise so getroffen, dass der induktive Verbraucher und die Zusatzinduktivität als gegensinnig gewickelte Spulen mit gemeinsamem Magnetkreis ausgebildet sind.

Für einen elektronisch steuerbaren Motor ist die Zusatzinduktivität für eine bestromte Erregerwicklung jeweils die im Kommutierungszyklus nachfolgend gegensinnig bestromte Erregerwicklung.

Die Erfindung wird anhand von in der Zeichnung dargestellten Ausführungsbeispielen näher erläutert. Es zeigen:
- Fig. 1: eine Anordnung mit einem über eine Leistungshalbleiter-Endstufe geschalteten Schaltrelais und
- Fig. 2: eine Anordnung mit einem elektronisch kommutierbaren Motor mit vier Polen und zwei Wickelsträngen als Erregerwicklungen.

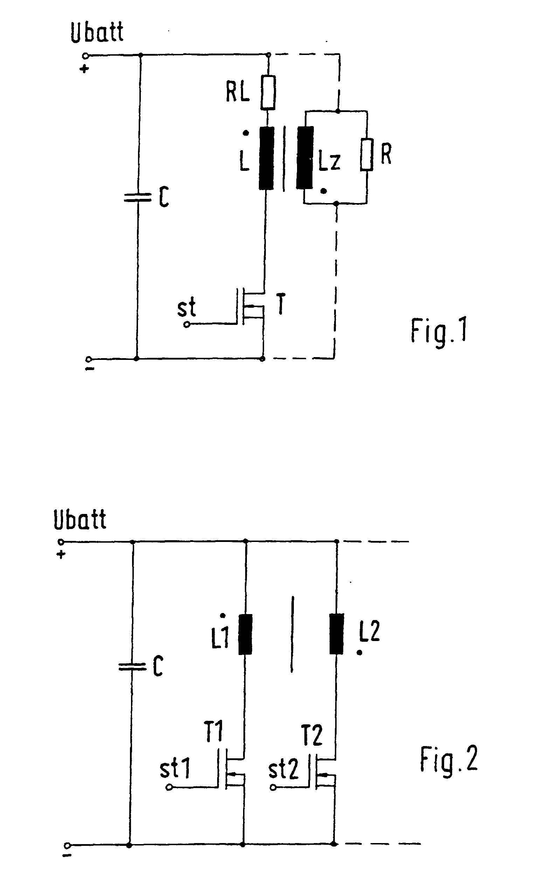

Das Ausführungsbeispiel nach Fig. 1 verwendet zum An- und Abschalten des induktiven Verbrauchers L einen mit T bezeichneten N-Kanal-MOS-FET. Die Ansteuerung erfolgt mit einem Steuersignal st, das beim Anstehen die Leistungshalbleiter-Endstufe T voll durchsteuert, so dass die Verlustleistung derselben möglichst klein ist und der maximale Strom durch den Verbraucher L mit dem Verbraucherwiderstand RL fließen kann. Dabei fällt am Verbraucher L praktisch die volle Gleichstrom-Versorgungsspannung Ubatt ab. Wird die Leistungshalbleiter-Endstufe T durch Abschalten des Steuersignals st nicht mehr angesteuert, dann nimmt sie den hochohmigen Schaltzustand ein, in dem für die Induktionsspannung des Verbrauchers L die parasitäre Diode der Leistungshalbleiter-Endstufe einen Stromkreis bildet.

Um einen Stromfluss darüber stark zu verringern, wird die Induktionsspannung auf eine Zusatzinduktivität Lz übertragen, die transformatorisch mit dem Verbraucher L gekoppelt ist, d.h. der Verbraucher L und die Zusatzinduktivität Lz sind gegensinnige Wicklungen mit gemeinsamem Magnetkreis. Ist die Zusatzinduktivität Lz mit einem Widerstand R belastet, dann wird damit die Energie der Induktion abgebaut. Die Energie kann jedoch auch - wie die gestrichelten Linien der Fig. 1 zeigen - in Gegenstromrichtung auf die Gleichstrom-Versorgungsspannung Ubatt mit dem parallel geschalteten Glättungskondensator C zurück übertragen werden.

Das Schaltbild nach Fig. 2 zeigt als induktive Verbraucher L1 und L2 die zwei Erregerwicklungen eines elektronisch kommutierbaren Motors. In dem Kommutierungszyklus werden die Verbraucher L1 und L2 abwechselnd bestromt, wobei sich von Schritt zu Schritt die Bestromungsrichtung der Erregerwicklungen ändert, da sie in die Reihenschaltungen mit gegensinnigem Wicklungssinn einbezogen sind. Die Leistungshalbleiter-Endstufen T1 und T2 werden im Kommutierungszyklus mit den aufeinander folgenden Steuersignalen st1, st2, st1, st2 ... beaufschlagt. Bei der Bestromung des Verbrauchers L1 wirkt der transformatorisch gekoppelte Verbraucher L2 als Zusatzinduktivität Lz, während bei der Bestromung des Verbrauchers L2 der Verbraucher L1 die Funktion der Zusatzinduktivität Lz übernimmt. In jeder Bestromungsphase arbeitet die Schaltung nach Fig.2 wie die Schaltung nach Fig. 1, so das auch hier keine Freilaufdioden an den Verbrauchern I1 und L2, d.h. den Erregerwicklungen des Motors erforderlich sind und die Leistungshalbleiter-Endstufen T1 und T2 gegenüber der beim Abschalten auftretenden Induktionsspannungen geschützt sind.

## Patentansprüche

1. Anordnung zum Schutz von mit MOS-FETs in Low-Side-Schaltung gebildeten Leistungshalbleiter-Endstufen (T1, T2), die in Abhängigkeit eines Steuersignals gegensinnige Erregerwicklungen (L1, L2) eines elektronisch kommutierbaren Motors oder gegensinnig gewickelte Spulen eines Schaltrelais oder eines Schaltschützes mit gemeinsamem Magnetkreis an eine Gleichstrom-Versorgungsspannung anschalten und von dieser abschalten, wobei Energie transformatorisch von einer Erregerwicklung (L1) oder Spule auf die als Zusatzinduktivität (Lz) wirkende andere Erregerwicklung (L2) oder Spule übertragbar ist, die mit einem Widerstand (R) belastet oder in Gegenstromrichtung mit der Gleichstrom-Versorgungsspannung (Ubatt) gekoppelt ist, und wobei bei einem elektronisch kommutierten Motor die Zusatzinduktivität für eine bestromte Erregerwicklung (z.B. L1 ) jeweils die im Kommutierungszyklus nachfolgend gegensinnig bestromte Erregerwicklung (L2) ist,
**dadurch gekennzeichnet,**
**dass** die beim Abschalten am induktiven Verbraucher (L, L1, L2) auftretende Abschaltenergie W = ½ LI² auf die Zusatzinduktivität (Lz, L2, L1) übertragbar ist und
**dass** die Leistungshalbleiter-Endstufen (T, T1, T2) N-Kanal-MOS-FETs sind, wobei eine parasitäre Diode des jeweiligen MOS-FET beim Abschalten des Steuersignals (st) einen Stromkreis mit verringertem Stromfluss bildet.

## Claims

1. Arrangement for protecting power semiconductor output stages (Tl, T2) which are formed with MOSFETs in a low-side circuit and, in a manner dependent on a control signal, connect opposing excitation windings (L1, L2) of an electronically commutatable motor or coils (which have been wound in the opposite sense) of a switching relay or of a switching contactor having a common magnetic circuit to a DC supply voltage and disconnect them from the latter, it being possible for energy to be transmitted, by means of a transformer, from one excitation winding (L1) or coil to the other excitation winding (L2) or coil that acts as an additional inductor (Lz) and is loaded by means of a resistor (R) or is coupled, in the counter-current direction, to the DC supply voltage (Ubatt), and, in the case of an electronically commutated motor, the additional inductor for an energized excitation winding (e.g. L1) respectively being the excitation winding (L2) that is subsequently energized in the opposite sense in the commutation cycle,
**characterized in that**
the turn-off energy W = ½ LI² that arises at the inductive load (L, L1, L2) during turn-off can be transmitted to the additional inductor (Lz, L2, L1), and
**in that** the power semiconductor output stages (T, Tl, T2) are N-channel MOSFETs, a parasitic diode of the respective MOSFET forming a circuit with reduced current flow when the control signal (st) is turned off.

## Revendications

1. Dispositif pour protéger des étages terminaux à semi-conducteurs de puissance (Tl, T2) formés par des transistors MOSFET dans un circuit aval, qui activent, en fonction d'un signal de commande, des bobinages d'excitation contraires (L1, L2) d'un moteur à commutation électronique ou des bobines enroulées de façon contraire d'un relais de commutation ou d'un contacteur avec circuit magnétique commun, sur une tension d'alimentation en courant continu et les désactivent de celle-ci, de l'énergie pouvant être transmise par transformation à partir d'un bobinage d'excitation (L1) ou d'une bobine vers l'autre bobinage d'excitation (L2) ou bobine agissant comme une inductance supplémentaire (Lz), qui est soumise à une résistance (R) ou est couplée à contre-courant avec la tension d'alimentation en courant continu (Ubatt), et dans le cas d'un moteur à commutation électronique, l'inductance supplémentaire pour un bobinage d'excitation alimenté (par exemple L1) est respectivement le prochain bobinage d'excitation alimenté dans le sens contraire dans le cycle de commutation (L2),
**caractérisé en ce que**
l'énergie de désactivation W = ½ LI² apparaissant lors de la désactivation au niveau du consommateur inductif (L, L1, L2) peut être transmise à l'inductance supplémentaire (Lz, L2, L1) ; les étages terminaux à semi-conducteurs de puissance (T, T1, T2) sont des transistors MOSFET Canal N, et une diode parasitaire du transistor MOSFET respectif forme, lors de la désactivation du signal de commande (st), un circuit électrique avec un flux de courant réduit.
